(19) **Europäisches Patentamt / European Patent Office / Office européen des brevets**

(11) **EP 4 358 188 A1**

(12) **EUROPEAN PATENT APPLICATION**
published in accordance with Art. 153(4) EPC

(43) Date of publication:
**24.04.2024 Bulletin 2024/17**

(21) Application number: **21946299.1**

(22) Date of filing: **21.06.2021**

(51) International Patent Classification (IPC):
**H01M 4/583** $^{(2010.01)}$  **H01M 4/36** $^{(2006.01)}$

(52) Cooperative Patent Classification (CPC):
**H01M 4/02; H01M 4/13; H01M 4/36; H01M 4/583; H01M 10/0525; H01M 10/056;** Y02E 60/10

(86) International application number:
**PCT/CN2021/101234**

(87) International publication number:
**WO 2022/266797 (29.12.2022 Gazette 2022/52)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Ningde Amperex Technology Limited**
**Ningde, Fujian 352100 (CN)**

(72) Inventors:
- **ZHENG, Zigui**
  **Ningde, Fujian 352100 (CN)**
- **YI, Zheng**
  **Ningde, Fujian 352100 (CN)**
- **DU, Peng**
  **Ningde, Fujian 352100 (CN)**
- **XIE, Yuansen**
  **Ningde, Fujian 352100 (CN)**

(74) Representative: **Icosa**
**83 avenue Denfert-Rochereau**
**75014 Paris (FR)**

(54) **NEGATIVE ELECTRODE, ELECTROCHEMICAL APPARATUS AND ELECTRONIC APPARATUS**

(57)    This application provides a negative electrode, an electrochemical apparatus, and an electronic apparatus. The negative electrode includes a negative electrode active material layer, the negative electrode active material layer includes negative electrode active material particles, and the negative electrode active material particle includes a porous portion and a nonporous portion with the heteroatom. The heteroatom includes at least one of element boron, nitrogen, fluorine, phosphorus, or sulfur and is located on an interface, and the interface is a region, in the nonporous portion, formed from a bordering position between the nonporous portion and the porous portion to 0.5 $\mu$m from the bordering position. In some embodiments of this application, a negative electrode active material particle includes a porous portion and a nonporous portion doped with boron, nitrogen, and other elements. The porous portion improves the lithium ion intercalation and deintercalation efficiency. In addition, boron, nitrogen, and other elements doped increase the gram capacity of the negative electrode active material, helping increase the energy density of the electrochemical apparatus.

FIG. 1

**Description**

**TECHNICAL FIELD**

This application relates to the field of electrochemical energy storage, and in particular, to a negative electrode, an electrochemical apparatus, and an electronic apparatus.

**BACKGROUND**

With the development and advancement of electrochemical apparatuses (for example, lithium-ion batteries), higher requirements are imposed on cycling performance and energy density of the electrochemical apparatuses. At present, improving negative electrode active materials is important for enhancing the cycling performance and energy density of the electrochemical apparatuses.

**SUMMARY**

This application provides a negative electrode, including a negative electrode active material layer. The negative electrode active material layer includes negative electrode active material particles, and the negative electrode active material particle includes a porous portion and a nonporous portion. The nonporous portion includes a heteroatom, and the heteroatom includes at least one of element boron, nitrogen, fluorine, phosphorus, or sulfur. The porous portion improves the lithium ion intercalation and deintercalation efficiency. In addition, when the negative electrode active material particles are doped with element boron, nitrogen, fluorine, phosphorus, or sulfur, these doping elements can be bonded with $Li^+$ to increase the capacity. As a result, the gram capacity of the negative electrode active material is increased, helping increase the energy density of an electrochemical apparatus.

In some embodiments, the nonporous portion has an interface, and the interface is located in a region formed from a bordering position between the nonporous portion and the porous portion to a distance of 0.5 $\mu$m from the bordering position. The bordering position is an arc where the porous portion and the nonporous portion intersect. With the arc as endpoints, line segments are drawn with a minimum distance of 0.5 $\mu$m from the arc, and the interface is a region formed by connecting all the other endpoints on the line segments. Through analysis by using a scanning electron microscope-energy spectrometer, within a test area of 0.2 $\mu$m $\times$ 0.2 $\mu$m in the interface, based on a total elemental atomic percentage of the heteroatom, C, and O, an atomic percentage of the heteroatom is a%, where $1 \leq a \leq 6$. Based on the total elemental atomic percentage of the heteroatom, C, and O, the atomic percentage of the heteroatom is a%, where $3.3 \leq a \leq 5.7$. When the percentage of the heteroatom on the interface is within this range, the lithium storage performance of the carbon negative electrode active material can be improved. In some embodiments, through analysis by using a scanning electron microscope-energy spectrometer, within a test area of 0.2 $\mu$m $\times$ 0.2 $\mu$m in the nonporous portion with a boundary 2.8 $\mu$m to 3.2 $\mu$m away from the bordering position, based on a total elemental atomic percentage of the heteroatom, C, and O, an atomic percentage of the heteroatom is b%, where $b \leq 0.1$. Specifically, line segments are drawn with minimum distances of 2.8 $\mu$m and 3.2 $\mu$m from endpoints on the arc, and all the other endpoints of the line segments are connected to form a region with a maximum distance of 3.2 $\mu$m and a minimum distance of 2.8 $\mu$m. When the atomic percentage in this region is less than or equal to 0.1%, adverse effects of the heteroatom inside the negative electrode active material particles on the energy density can be avoided and the energy density of the electrochemical apparatus can be increased by the heteroatom to the greatest extent, so as to ensure the overall energy density of the negative electrode active material layer. Therefore, b is $\leq 0.1$ in this application. In some embodiments, through analysis by using a scanning electron microscope-energy spectrometer, within a test area of 50 $\mu$m $\times$ 50 $\mu$m, an area ratio of the porous portion to the nonporous portion is 0.05 to 0.30. The area ratio of the porous portion to the nonporous portion being within this range can increase the energy density of the electrochemical apparatus and help improve the rate performance of the electrochemical apparatus.

In some embodiments, the porous portion has a pore diameter with a value ranging from 0.1 $\mu$m to 3 $\mu$m. In some embodiments, 50 scanning electron microscope (SEM) images (60 $\mu$m $\times$ 40 $\mu$m) are obtained randomly, an average pore diameter is calculated on the pores with a pore diameter ranging from 0.1 $\mu$m to 3 $\mu$m on each image, and then an average value is calculated on the 50 images to obtain the average pore diameter. In this application, the average pore diameter is 0.6 $\mu$m to 1.5 $\mu$m. In some embodiments, the average pore diameter is 0.8 $\mu$m to 1.2 $\mu$m.

An appropriate pore diameter helps transport of lithium ions, without causing great adverse effects on the energy density of the electrochemical apparatus.

In some embodiments, the negative electrode active material particles have a specific surface area of 1 $m^2$/g to 10 $m^2$/g. When the specific surface area of the negative electrode active material particles falls within this range, the overall kinetic performance of the electrochemical apparatus can be improved, without expediting electrolyte consumption due to an excessively large specific surface area.

In some embodiments, the negative electrode has a porosity of 15% to 40%. A porosity being within this range achieves a good balance between proper transport of lithium ions and increased internal resistance.

In some embodiments, a ratio $I_D/I_G$ of the negative electrode active material particles ranges from 0.8 to 1.4 under a Raman spectroscopy test, where $I_D$ denotes a peak intensity at 1350 cm$^{-1}$ in the Raman spectrum and $I_G$ denotes a peak intensity at 1580 cm$^{-1}$ in the Raman spectrum. Bonding of the heteroatom and carbon atom in the microcrystalline negative electrode active material will increase defects in the microcrystalline negative electrode active material. When the percentage of heteroelemental atoms is higher, a larger $I_D/I_G$ value is obtained through measurement, indicating more defects in the negative electrode active material particles. Therefore, the gram capacity of the negative electrode active material particles can be increased. In addition, if the $I_D/I_G$ value is excessively great, the negative electrode active material particles have too many defects, impairing the stability of the structure of the negative electrode active material particles.

In some embodiments, the negative electrode active material particles have $D_v10 < 6$ $\mu$m and $D_v50 < 15$ $\mu$m. In some embodiments, the negative electrode active material particles have $D_v90 < 30$ $\mu$m. The negative electrode active material particles of the foregoing particle sizes can improve the kinetic performance of the electrochemical apparatus. In some embodiments, the negative electrode active material particles include hard carbon. Hard carbon has a larger gram capacity and less cyclic swelling relative to graphite. Therefore, the electrochemical apparatus has excellent charge/discharge rate performance and good charge/discharge cycling performance. In some embodiments, the negative electrode active material layer has a compacted density of 0.95 g/cm$^3$ to 1.40 g/cm$^3$. A compacted density being within this range achieves a good balance between higher energy density and increased impedance.

Some other embodiments of this application provide an electrochemical apparatus. The electrochemical apparatus includes the foregoing negative electrode and an electrolyte, where the electrolyte includes at least one of fluoroether, fluoroethylene, or ether nitrile.

In some embodiments, the negative electrode further includes a negative electrode current collector, and an adhesion force between the negative electrode current collector and the negative electrode active material layer is 3 N/m to 50 N/m. In this case, film stripping or burrs are less likely to occur during slitting, and the internal resistance of the electrochemical apparatus will not be high due to excess use of a binder. In some embodiments, the electrolyte further includes a lithium salt, where the lithium salt includes lithium bis(fluorosulfonyl)imide (LiFSI) and lithium hexafluorophosphate (LiPF$_6$), a concentration of the lithium salt is 1 mol/L to 2 mol/L, and a mass ratio of lithium bis(fluorosulfonyl)imide to lithium hexafluorophosphate is 0.06 to 5. The cycling performance and swelling performance of the electrochemical apparatus are improved by adjusting the mass ratio of LiFSI to LiPF$_6$. This is because the negative electrode active material doped with the heteroatom can interact with the lithium salt in the electrolyte to improve the interface between the negative electrode and the electrolyte.

An embodiment of this application further provides an electronic apparatus, including the foregoing electrochemical apparatus.

In some embodiments of this application, a negative electrode active material particle includes a porous portion and a region doped with boron, nitrogen, and other elements. The porous portion improves the lithium ion intercalation and deintercalation efficiency. In addition, elements doped, such as boron or nitrogen increase the gram capacity of the negative electrode active material, helping increase the energy density of the electrochemical apparatus.

## BRIEF DESCRIPTION OF DRAWINGS

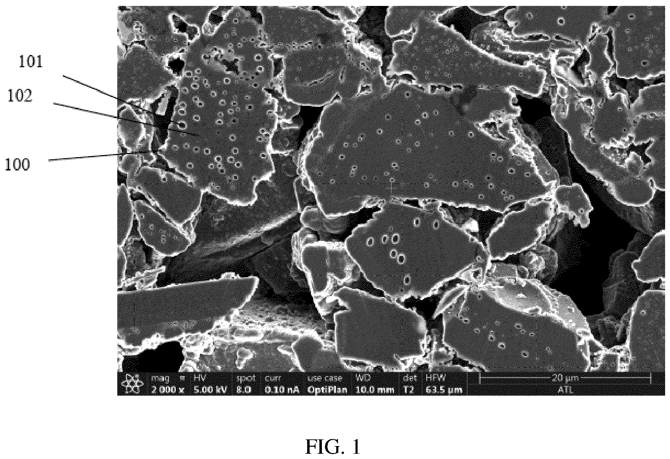

FIG. 1 shows an example of a scanning electron microscope image of a negative electrode active material layer.

## DETAILED DESCRIPTION

The following embodiments may enable those skilled in the art to understand this application more comprehensively, but do not limit this application in any way.

Some embodiments of this application provide a negative electrode, where the negative electrode includes a negative electrode active material layer. In some embodiments, the negative electrode active material layer includes negative electrode active material particles. In some embodiments, the negative electrode active material particle includes a porous portion and a nonporous portion with a heteroatom. In some embodiments, the porous portion of a negative electrode active material particle refers to pores with a pore diameter ranging from 0.1 $\mu$m to 3 $\mu$m. In a case that the porous portion is not a circle, the pore diameter refers to a maximum distance between any two points in a pore in the scanning electron microscope image. As shown in FIG. 1, an example scanning electron microscope image of a negative electrode active material layer is illustrated. The negative electrode active material layer includes negative electrode active material particles 100. For purpose of simplicity, only one negative electrode active material particle 100 is marked in FIG. 1. In some embodiments, the negative electrode active material particle 100 includes a porous portion 101 and a nonporous portion 102. The diameter of the porous portion (pore diameter) is a maximum distance between two points in the pore (including edge locations). In some embodiments, the pore diameter is 0.1 $\mu$m to 3 $\mu$m.

Some embodiments of this application provide a negative electrode. 50 scanning electron microscope images (60 $\mu$m $\times$ 40 $\mu$m) are obtained randomly, an average pore diameter is calculated on the pores with a pore diameter ranging from 0.1 $\mu$m to 3 $\mu$m on each image, and then an average value is calculated on the 50 images to obtain the average pore diameter. In this application, the average pore diameter is 0.6 $\mu$m to 1.5 $\mu$m.

In some embodiments, the heteroatom includes at least one of element boron, nitrogen, fluorine, phosphorus, or sulfur and is located on an interface, where the interface is a region, in the nonporous portion 102, within 0.5 $\mu$m away from a bordering position between the porous portion 101 and the nonporous portion 102. In other words, the interface is part of the nonporous portion 102, and is a region formed by extending a maximum of 0.5 $\mu$m towards the nonporous portion 102 from the bordering position between the porous portion 101 and the nonporous portion 102. In some embodiments, two porous portions are close, and one porous portion is reached when the interface extends less than 0.5 $\mu$m (for example, 0.3 $\mu$m). In this case, the interface extends only 0.3 $\mu$m from the bordering position.

The negative electrode active material particle 100 includes the porous portion and the region doped with boron, nitrogen, and other elements. The porous portion improves the lithium ion intercalation and deintercalation efficiency. In addition, when the negative electrode active material particles are doped with element boron, nitrogen, fluorine, phosphorus, or sulfur, these doping elements can be bonded with Li$^+$ to increase the capacity. As a result, the gram capacity of the negative electrode active material is increased, helping increase the energy density of an electrochemical apparatus. In some embodiments, as an example, hard carbon is used as the negative electrode active material. For a porous hard carbon negative electrode active material doped with a heteroatom, the heteroelements can properly adjust the electronic structure of carbon and enhance the conductivity. The heteroatom enter a carbon microcrystalline layer, which not only enlarges the interlayer spacing of carbon, but also provides more defects and active sites. This can increase the adsorption capacity of lithium ions, thereby improving the gram capacity and rate performance of the electrochemical apparatus. In addition, the porous hard carbon negative electrode active material has a large specific surface area and abundant pore structures, which can not only facilitate transport of lithium ions but also provide a fast passage for transport of lithium ions and electrons. This mitigates the effect of potential hysteresis and achieves excellent rate performance.

In some embodiments, the negative electrode active material may be prepared using a resin eutectic blending method. Specifically, second resin containing a heteroatom group and with a low carbon residual content is uniformly blended into first resin with a high carbon residual content, where the first resin is used as a matrix resin. In some embodiments, the second resin may be a polymer such as a borazine ring-containing polymer, polybenzoboron imidazole, boron phenolic resin, urea-formaldehyde resin, polyaniline, polyimide, melamine resin, polytetrafluoroethylene, polyvinylidene fluoride, polytetrafluorovinylidene, polytetrafluorovinylidene chloride, polyperfluoroethylene propylene, phosphoric acid-doped epoxy resin, phosphorus-based polyacrylic acid, phosphorus-based polymaleic acid, bisphenol A-type polysulfone, polyethersulfone, polyaromatic phenol, and polyphenylene sulfide, and may also be at least one of blends of two or more polymers such as a blend of urea-formaldehyde resin and polybenzoboron imidazole, a blend of boron phenolic resin and polyimide, phosphoric acid-doped urea-formaldehyde resin, and a blend of polyaniline and phosphorus-based polymaleic acid. The first resin may include a polymer blend of one or more polymers such as polyvinyl chloride, polymethyl methacrylate, polyetheretherketone, polyphenylene ether, polycarbonate, polyethylene glycol, polyester fiber, polyethylene terephthalate, and polystyrene. In some embodiments, the second resin and the first resin are melt-blended at a temperature of 150°C to 270°C and undergo two hours of pyrolysis at 710°C to 1300°C, and then are pulverized and sieved. In the pyrolysis process, the decomposed second resin with a low carbon residual content leaves pores on the first resin with a high carbon residual content. In addition, benzene series obtained after pyrolysis will form micropores on the first resin with a high carbon residual content or continue with dehydrogenation for carbon formation after overflowing from the second resin with a low carbon residual content. Heteroelements are absorbed on the inner walls of the pores and enter the carbon crystallites of the first resin. It should be understood that the foregoing preparation method is only exemplary and other appropriate preparation methods may also be used for preparing the negative electrode active material.

In some embodiments, element distribution of the negative electrode active material layer is analyzed using a scanning electron microscope-energy spectrometer, and within a test area of 0.2 $\mu$m $\times$ 0.2 $\mu$m in the interface, based on an elemental atomic percentage of the heteroatom (namely, atoms of elements boron, nitrogen, fluorine, phosphorus, and sulfur), C, and O, an atomic percentage of the heteroatom is a% on the interface, where $1 \le a \le 6$. That is, the atomic percentage of the heteroatom a% on the interface = the number of the heteroatom/(the number of the heteroatom + the number of C atom + the number of O atom). In some embodiments, in a region in the nonporous portion with a boundary between 2.8 $\mu$m to 3.2 $\mu$m away from a bordering position between the porous portion and the nonporous portion (vertical lines are drawn starting from the bordering position between the porous portion and the nonporous portion to the nonporous portion, with a length of 2.8 $\mu$m to 3.2 $\mu$m, and the region is enclosed by the bordering position between the porous portion and the nonporous portion and the boundaries formed by connecting the endpoints of all line segments), based on elemental atomic percentages of the heteroatom, C, and O in a test area of 0.2 $\mu$m$\times$0.2 $\mu$m, the atomic

percentage of the heteroatom is b%, where $b \leq 0.1$. That is, the atomic percentage of the heteroatom b% in this region = the number of the heteroatom/(the number of the heteroatom + the number of C atom + the number of O atom). In some embodiments, changing the type and percentage of the heteroatom carried in the second resin melt-blended with the first resin can change a doping element of the resulting negative electrode active material particles. The doping element may be a single doping element (for example, boron, nitrogen, fluorine, phosphorus, or sulfur), two doping elements (for example, boron and nitrogen, boron and fluorine, boron and phosphorus, boron and sulfur, nitrogen and fluorine, nitrogen and phosphorus, or nitrogen and sulfur), or three doping elements (for example, nitrogen-phosphorus-sulfur, nitrogen-fluorine-phosphorus, or nitrogen-fluorine-sulfur). In some embodiments, the heteroatom break a covalent bond with the second resin and enter the first resin during pyrolysis, and are enriched in the position of pyrolysis and present a gradient decrease in content as the distance becomes larger into the first resin. In some embodiments, doping nitrogen in a carbon material has the following two advantages. Proper bonding between carbon and nitrogen greatly changes the electronic properties of the carbon material, provides more active sites, and improves the electrochemical performance of a negative electrode active material. In addition, doping of nitrogen causes a large number of lattice defects to appear in the carbon negative electrode active material, and these defects can be used as lithium storage sites, further improving the lithium storage performance of the carbon negative electrode active material. In some embodiments, if an amount of the doping element on the interface is excessively small, the gram capacity of the negative electrode active material can be improved to a limited extent; if an amount of the doping element on the interface is excessively large, the gram capacity of the negative electrode active material cannot be further improved, but the overall energy density of the negative electrode active material layer may be reduced. In some embodiments, the doping element in the nonporous portion with a boundary between 2.8 $\mu$m to 3.2 $\mu$m from the bordering position (this position is restricted within the nonporous portion and does not include when passing through one porous portion, passing through another porous portion at a position of 2.8$\mu$m to 3.2$\mu$m outward) can improve the gram capacity of the negative electrode active material to a limited extent. Therefore, the amount of the doping element at such position cannot be excessively large, in order to avoid reducing the overall energy density of the negative electrode active material layer.

In some embodiments, through analysis on a cross section of the negative electrode active material layer by using a scanning electron microscope, within a test area of 50 $\mu$m $\times$ 50 $\mu$m, an area ratio of the porous portion to the nonporous portion is 0.05 to 0.30 and a maximum distance between two points in the porous portion ranges from 0.1 $\mu$m to 3 $\mu$m. In some embodiments, due to the varying compatibility between different resins, the second resin is present in different states in the first resin after melt blending, which is evident in differences in the pore diameter and pore quantity of pore structures formed within the first resin with a high carbon residual content after pyrolysis. In some embodiments, large pores (pore diameter > 500 nm) in the negative electrode active material particles can hardly store lithium ions, and the energy density of an active material will be reduced when the pore diameter or pore quantity is excessively large. Therefore, preferably, the area ratio of the porous portion to the nonporous portion is 0.05 to 0.15, and the pore diameter of the porous portion ranges from 0.1 $\mu$m to 0.5 $\mu$m. In addition, if the pore diameter or pore quantity is excessively small, transport of lithium ions in the negative electrode active material particles is hindered, which affects the rate performance improvement of the electrochemical apparatus.

In some embodiments, the negative electrode active material particles have a specific surface area of 1 $m^2$/g to 10 $m^2$/g. The specific surface area of a negative electrode active material particle will be increased when porous portions are included, and the increased surface area will provide more sites of contact between the negative electrode active material and the electrolyte, which improves the overall kinetic performance of the electrochemical apparatus. However, an excessively large specific surface area results in more solid electrolyte interphase (SEI) films during first-cycle charging. As a result, more lithium ions will be consumed, reducing the first-cycle charge/discharge efficiency of the electrochemical apparatus. In some embodiments, the negative electrode active material particles have a specific surface area of 1 $m^2$/g to 5 $m^2$/g.

In some embodiments, the negative electrode has a porosity of 15% to 40%. Depending on control of the rolling pressure, a thickness of the negative electrode active material layer can be changed continuously, that is, the porosity of the active material layer is controlled. The porosity has similar effects to pores inside the particles, and can also contribute to the electrochemical capacity to a certain extent, which is directly reflected by an increase in the energy density of the electrochemical apparatus. An excessively large porosity will reduce points of contact between negative electrode active material particles, increasing the internal resistance of the electrochemical apparatus and reducing the energy density to some extent. Therefore, the porosity of the negative electrode is preferably 15% to 30%.

In some embodiments, a ratio $I_D/I_G$ of the negative electrode active material particles ranges from 0.8 to 1.4 under a Raman spectroscopy test, where $I_D$ denotes a peak intensity at 1350 $cm^{-1}$ in the Raman spectrum and $I_G$ denotes a peak intensity at 1580 $cm^{-1}$ in the Raman spectrum. Bonding of the heteroatom and carbon atom in the microcrystalline negative electrode active material will increase defects in the microcrystalline negative electrode active material. When the percentage of heteroelemental atoms is higher, a greater $I_D/I_G$ value is measured, indicating more defects in the negative electrode active material particles. Therefore, the gram capacity of the negative electrode active material particles can be increased. In addition, if the $I_D/I_G$ value is excessively great, the negative electrode active material particles have too many defects, impairing the stability of the structure of the negative electrode active material particles.

In some embodiments, the negative electrode active material particles have $D_v10 < 6 \ \mu m$ and $D_v50 < 15 \ \mu m$. In some embodiments, the negative electrode active material particles have $D_v90 < 30 \ \mu m$. The negative electrode active material particles are pulverized, and sieved using a sizing screen to control particle size distribution. In some embodiments, $D_v10$ refers to a particle size when the cumulative volume distribution percentage reaches 10% as counted from the small particle size side. Similarly, $D_v50$ and $D_v90$ refer to particle sizes when the cumulative volume distribution percentages reach 50% and 90% respectively, as counted from the small particle size side. If particle sizes of the negative electrode active material particles are excessively large, a deintercalating distance of lithium ions is increased and points of contact between particles are reduced, impairing the kinetics of the electrochemical apparatus and increasing the impedance.

In some embodiments, the negative electrode active material particles include hard carbon. Compared with graphite, hard carbon has a higher gram capacity, typically 500 mAh/g to 710 mAh/g and even as high as 1000 mAh/g. The microcrystalline carbon layers in a hard carbon particle are arranged roughly in parallel, which is similar to graphite. However, microcrystallites of hard carbon are in small size and anisotropic arrangement, and the 002 interplanar spacing is approximately 0.35 nm to 0.40 nm, larger than the interplanar spacing of graphite. This facilitates lithium intercalation, without causing significant structural swelling, contributing to excellent charge/discharge rate performance and good charge/discharge cycling performance. The 002 interplanar spacing can be analyzed using the D8ADVANCE XRD device of BRUKER.

In some embodiments, the negative electrode active material layer has a compacted density of 0.95 g/cm³ to 1.40 g/cm³. The negative electrode active material layer with an excessively low compacted density is detrimental to an increase in the overall energy density of the electrochemical apparatus, while the negative electrode active material layer with an excessively high compacted density will increase impedance for transport of lithium ions, hindering improvement on the rate performance of the electrochemical apparatus.

In some embodiments, an electrochemical apparatus is provided. The electrochemical apparatus includes the foregoing negative electrode and an electrolyte, where the electrolyte includes at least one of fluoroether, fluoroethylene, or ether nitrile. In some embodiments, the electrolyte further includes a lithium salt. The lithium salt includes lithium bis(fluorosulfonyl)imide and lithium hexafluorophosphate. A concentration of the lithium salt ranges from 1 mol/L to 2 mol/L, and a mass ratio of the lithium bis(fluorosulfonyl)imide to the lithium hexafluorophosphate ranges from 0.06 to 5.

In some embodiments, the negative electrode further includes a negative electrode current collector. In some embodiments, the negative electrode active material layer may be located on one side or two sides of the negative electrode current collector. In some embodiments, an adhesion force between the negative electrode current collector and the negative electrode active material layer is 3 N/m to 50 N/m. If the adhesion force between the negative electrode current collector and the negative electrode active material layer is excessively small, the rolling or slitting process is highly susceptible to film stripping or burrs, resulting in safety hazards for the electrochemical apparatus. If the adhesion force between the negative electrode current collector and the negative electrode active material layer is excessively great, generally a binder for the negative electrode active material layer needs to have a high mass percentage, that is, an excessive of binder is used. This will cause high internal resistance and great kinetic loss, and accelerate deterioration of the long cycling performance of the electrochemical apparatus. In some embodiments, an adhesion force between the negative electrode current collector and the negative electrode active material layer is 10 N/m to 20 N/m. This can reduce safety hazards, without using an excessive amount of binder.

In some embodiments, the negative electrode active material layer may further include a conductive agent and a binder. In some embodiments, the conductive agent in the negative electrode active material layer may include at least one of conductive carbon black, Ketjen black, laminated graphite, graphene, carbon nanotube, or carbon fiber. In some embodiments, the binder in the negative electrode active material layer may include at least one of carboxymethyl cellulose (CMC), polyacrylic acid, polyvinylpyrrolidone, polyaniline, polyimide, polyamideimide, silicone oil, styrene-butadiene rubber, epoxy resin, polyester resin, polyurethane resin, or polyfluorene. In some embodiments, a mass ratio of the negative electrode active material, the conductive agent, and the binder in the negative electrode active material layer may be (78-98.5):(0.1-10):(0.1-10). It should be understood that the foregoing description is only exemplary. Any other appropriate materials and mass ratios may be used. In some embodiments, the negative electrode current collector may be at least one of a copper foil current collector, a nickel foil current collector, or a carbon-based current collector.

In some embodiments, the electrochemical apparatus may include an electrode assembly, where the electrode assembly includes a positive electrode, a negative electrode, a separator provided between the positive electrode and the negative electrode. In some embodiments, the negative electrode is any of the foregoing negative electrodes.

In some embodiments, the electrochemical apparatus includes a lithium-ion battery but this application is not limited thereto. In some embodiments, the electrolyte may further include a non-aqueous solvent. The non-aqueous solvent may be a carbonate compound, a carboxylate compound, an ether compound, another organic solvent, or a combination thereof.

The carbonate compound may be a linear carbonate compound, a cyclic carbonate compound, a fluorocarbonate compound, or a combination thereof.

An example of the linear carbonate compound is diethyl carbonate (DEC), dimethyl carbonate (DMC), dipropyl carbonate (DPC), methyl propyl carbonate (MPC), ethyl propyl carbonate (EPC), methyl ethyl carbonate (MEC), and a combination thereof. An example of the cyclic carbonate compound is ethylene carbonate (EC), propylene carbonate (PC), butylene carbonate (BC), vinyl ethylene carbonate (VEC), or a combination thereof. An example of the fluorocarbonate compound is fluoroethylene carbonate (FEC), 1,2-difluoroethylene carbonate, 1,1-difluoroethylene carbonate, 1,1,2-trifluoroethylene carbonate, 1,1,2,2-tetrafluoroethylene carbonate, 1-fluoro-2-methylethylene carbonate, 1-fluoro-1-methylethylene carbonate, 1,2-difluoro-1-methylethylene carbonate, 1,1,2-trifluoro-2-methylethylene carbonate, trifluoromethylethylene carbonate, or a combination thereof.

An example of the carboxylate compound is methyl acetate, ethyl acetate, n-propyl acetate, tert-butyl acetate, methyl propionate, ethyl propionate, propyl propionate, γ-butyrolactone, decanolide, valerolactone, mevalonolactone, caprolactone, methyl formate, or a combination thereof.

An example of the ether compound is dibutyl ether, tetraglyme, diglyme, 1,2-dimethoxyethane, 1,2-diethoxyethane, ethoxymethoxy ethane, 2-methyltetrahydrofuran, tetrahydrofuran, or a combination thereof.

An example of the another organic solvent is dimethyl sulfoxide, 1,2-dioxolane, sulfolane, methyl sulfolane, 1,3-dimethyl-2-imidazolidinone, N-methyl-2-pyrrolidone, formamide, dimethylformamide, acetonitrile, trimethyl phosphate, triethyl phosphate, trioctyl phosphate, phosphate ester, or a combination thereof.

In some embodiments, the positive electrode includes a positive electrode current collector and a positive electrode active material layer provided on the positive electrode current collector, where the positive electrode active material layer may include a positive electrode active material. In some embodiments, the positive electrode active material includes at least one of lithium cobalt oxide, lithium iron phosphate, lithium manganese iron phosphate, sodium iron phosphate, lithium vanadium phosphate, sodium vanadium phosphate, lithium vanadyl phosphate, sodium vanadyl phosphate, lithium vanadate, lithium manganate oxide, lithium nicotinate, lithium nickel cobalt manganate, lithium-rich manganese-based material, or lithium nickel cobalt aluminate. In some embodiments, the positive electrode active material layer may further include a conductive agent. In some embodiments, the conductive agent in the positive electrode active material layer may include at least one of conductive carbon black, Ketjen black, laminated graphite, graphene, carbon nanotubes, or carbon fiber. In some embodiments, the positive electrode active material layer may further include a binder, and the binder in the positive electrode active material layer may include at least one of carboxymethyl cellulose (CMC), polyacrylic acid, polyvinylpyrrolidone, polyaniline, polyimide, polyamideimide, silicone oil, styrene-butadiene rubber, phenolic epoxy resin, polyester resin, polyurethane resin, or polyfluorene. In some embodiments, in the positive electrode active material layer, a mass ratio of the positive electrode active material, the conductive agent, and the binder may be (80-99):(0.1-10):(0.1-10). In some embodiments, a thickness of the positive electrode active material layer may be 10 μm to 500 μm. It should be understood that the foregoing descriptions are merely examples, and any other suitable material, thickness, and mass ratio may be adopted for the positive electrode active material layer.

In some embodiments, the positive electrode current collector may be made of Al foil. Certainly, other positive electrode current collectors commonly used in the art may also be used. In some embodiments, a thickness of the positive electrode current collector may range from 1 μm to 50 μm. In some embodiments, the positive electrode active material layer may be applied only on part of the positive electrode current collector.

In some embodiments, a separator includes at least one of polyethylene, polypropylene, polyvinylidene fluoride, polyethylene terephthalate, polyimide, or aramid. For example, polyethylene is selected from at least one of high-density polyethylene, low-density polyethylene, or ultra-high molecular weight polyethylene. Especially, polyethylene and polypropylene have a good effect on preventing short circuits, and can improve stability of a battery through a shutdown effect. In some embodiments, a thickness of the separator ranges from approximately 5 μm to 50 μm.

In some embodiments, a surface of the separator may further include a porous layer. The porous layer is disposed on at least one surface of the separator. The porous layer includes inorganic particles and the binder. The inorganic particles are selected from at least one of aluminum oxide ($Al_2O_3$), silicon oxide ($SiO_2$), magnesium oxide (MgO), titanium oxide ($TiO_2$), hafnium dioxide ($HfO_2$), tin oxide ($SnO_2$), cerium dioxide ($CeO_2$), nickel oxide (NiO), zinc oxide (ZnO), calcium oxide (CaO), zirconia oxide ($ZrO_2$), yttrium oxide ($Y_2O_3$), silicon carbide (SiC), boehmite, aluminum hydroxide, magnesium hydroxide, calcium hydroxide, or barium sulfate. In some embodiments, a pore diameter of the separator ranges from approximately 0.01 μm to 1 μm. The binder in the porous layer is selected from at least one of polyvinylidene fluoride, vinylidene fluoride-hexafluoropropylene copolymer, polyamide, polyacrylonitrile, polyacrylic ester, polyacrylic acid, a polyacrylic salt, sodium carboxymethyl cellulose, polyvinylpyrrolidone, polyvinyl ether, polymethyl methacrylate, polytetrafluoroethylene, or polyhexafluoropropylene. The porous layer on the surface of the separator can improve heat resistance, oxidation resistance, and electrolyte infiltration performance of the separator, and enhance adhesion between the separator and the electrode plate.

In some embodiments of this application, an electrode assembly of the electrochemical apparatus is a wound electrode assembly, a laminated electrode assembly, or a folded electrode assembly. In some embodiments, the positive electrode and/or the negative electrode of the electrochemical apparatus may be a multilayer structure formed in a winding or stacking manner, or may alternatively be a single-layer structure formed by stacking a single-layer positive electrode, a separator, and a single-layer negative electrode.

In some embodiments of this application, a lithium-ion battery is used as an example. A positive electrode, a separator, and a negative electrode are wound or stacked in sequence to form an electrode assembly, and the electrode assembly is then packaged in an aluminum-plastic film, followed by injection of an electrolyte, formation, and packaging, so that the lithium-ion battery is prepared. Then, a performance test is performed on the prepared lithium-ion battery.

Those skilled in the art will understand that the method for preparing the electrochemical apparatus (for example, the lithium-ion battery) described above is only an embodiment. Without departing from the content disclosed in this application, other methods commonly used in the art may be used.

An embodiment of this application further provides an electronic apparatus including the foregoing electrochemical apparatus. The electronic apparatus in the embodiments of this application is not particularly limited, and may be any known electronic apparatus used in the prior art. In some embodiments, the electronic apparatus may include but is not limited to a notebook computer, a pen-input computer, a mobile computer, an electronic book player, a portable telephone, a portable fax machine, a portable copier, a portable printer, a stereo headset, a video recorder, a liquid crystal television, a portable cleaner, a portable CD player, a mini-disc, a transceiver, an electronic notepad, a calculator, a memory card, a portable recorder, a radio, a standby power source, a motor, an automobile, a motorcycle, a power-assisted bicycle, a bicycle, a drone, a lighting appliance, a toy, a game console, a clock, an electric tool, a flash lamp, a camera, a large household battery, a lithium-ion capacitor, and the like.

Some specific examples and comparative examples are listed below to better illustrate this application. Lithium-ion batteries are used as examples.

Example 1

Preparation of positive electrode: Lithium cobalt oxide as a positive electrode active material, conductive carbon black (Super P), and polyvinylidene fluoride (PVDF) were mixed at a weight ratio of 97:1.4:1.6, and N-methylpyrrolidone (NMP) was added as a solvent, and the mixture was well stirred. A slurry (with a solid content of 72wt%) was uniformly applied on a positive electrode current collector aluminum foil till a thickness of 80 $\mu$m, dried at 85°C, followed by cold pressing, cutting, and slitting, and then dried in vacuum at 85°C for four hours to obtain the positive electrode.

Preparation of negative electrode: Artificial hard carbon, a binder styrene-butadiene rubber, and sodium carboxymethyl cellulose (CMC) were dissolved in deionized water at a weight ratio of 97:1.5:1.5 to form a negative electrode slurry (with a solid content of 40wt%). A 10 $\mu$m-thick copper foil is used as a negative electrode current collector. The negative electrode slurry is applied on the negative electrode current collector till a thickness of 50 $\mu$m, dried at 85°C, followed by cold pressing, cutting, and slitting, and then was dried in vacuum at 120°C for 12 hours to obtain the negative electrode.

The artificial hard carbon was prepared in the following steps: boron-containing polyethylene containing a boron atomic group and polyphenylene ether were melt-blended at a mass ratio of 1.5:8.5 at 150°C to 300°C, pyrolyzed at 710°C for two hours, and then pulverized and sieved. After sieving, $D_v90$ was controlled to be not greater than 30 $\mu$m, and $D_n10$ was in a range of 0.1 $\mu$m to 0.9 $\mu$m. Then, an area ratio of a porous portion to a nonporous portion ranged from 0.05 to 0.30.

Preparation of separator: 7 $\mu$m-thick polyethylene (PE) was used as the separator.

Preparation of electrolyte: In a dry argon atmosphere glove box, ethylene carbonate (EC), propylene carbonate (PC), diethyl carbonate (DEC) were mixed at a mass ratio of EC:PC:DEC=1:1:1, dissolved, and stirred properly, and then a lithium salt $LiPF_6$ was added. After uniform mixing, a base electrolyte was obtained, in which a concentration of $LiPF_6$ was 1 mol/L. Then, 2wt% of 1,3-propane sultone, 2wt% of fluoroethylene, and 2wt% of succinonitrile were added and mixed evenly to obtain the electrolyte.

Preparation of lithium-ion battery: The positive electrode, the separator, and the negative electrode were stacked in sequence, so that the separator was disposed between the positive electrode and the negative electrode for isolation, and winding was performed to obtain an electrode assembly. The electrode assembly was placed in an outer package aluminum-plastic film, and was dehydrated at 80°C. Then, the foregoing electrolyte was injected, and packaging was performed, followed by processes such as formation, degassing, and trimming to obtain the lithium-ion battery.

In other examples and comparative examples, parameters are changed for the process of preparing artificial hard carbon based on the steps in Example 1. Specific changed parameters are as follows.

In Example 2 to Example 4, boron doping was used (that is, mass ratios of the first resin polyphenylene ether and the second resin boron-containing polyethylene were 0.85:0.15, 0.85:0.15, and 0.70:0.30 respectively), and the pyrolysis temperatures were 910°C, 1110°C, and 910°C respectively. In Example 5 to Example 8, nitrogen doping was used (that is, the mass ratios of the first resin polyphenylene ether and the second resin polyaniline were 0.85:0.15, 0.85:0.15, 0.85:0.15, 0.85:0.15, and 0.70:0.30 respectively), a melting temperature was close to that in Example 1 to Example 4, and the pyrolysis temperatures are shown in Table 4. In Example 9 to Example 12, fluorine doping was used (that is, the mass ratios of the first resin polyphenylene ether and the second resin polytetrafluoroethylene were 0.85:0.15, 0.85:0.15, 0.85:0.15, and 0.70:0.30 respectively), the melting temperature was close to that in Example 1 to Example 4, and the pyrolysis temperature is shown in Table 4. In Example 13 to Example 16, phosphorus doping was used (that is, the mass ratios of the first resin polyphenylene ether to the second resin phosphorus-based polyacrylic acid were 0.85:0.15, 0.85:0.15, 0.85:0.15, and 0.70:0.30 respectively), and the melting temperature and pyrolysis temperature were similar to those in Examples 1 to 4. In Example 17 to Example 20, sulfur doping was used (that is, the mass ratios of the first resin polyphenylene ether to the second resin polyethersulfone were 0.85:0.15, 0.85:0.15, 0.85:0.15, and 0.70:0.30 respectively), and the melting temperature and pyrolysis temperatures were similar to those in Examples 1 to 4. In Examples 21 to 24, boron-nitrogen doping was used (that is, the mass ratios of the first resin polyphenylene ether to the second resin were 0.85:0.15, 0.85:0.15, 0.85:0.15, 0.85:0.15, and 0.70:0.30 respectively), where the second resin was a blend of urea-formaldehyde resin and polybenzoboron imidazole and a mass ratio of urea-formaldehyde resin to polybenzoboron imidazole was 2:3, and the melting and pyrolysis temperatures were similar to those in Examples 1 to 4. In Example 25 to Example 28, nitrogen-phosphorus doping was used (that is, the mass ratios of the first resin polyphenylene ether to the second resin are 0.85:0.15, 0.85:0.15, 0.85:0.15, and 0.70:0.30 respectively), where the second resin was a blend of urea-formaldehyde resin and phosphoric acid-doped urea-formaldehyde resin mixed at a mass ratio of 2:3, and the melting temperature and pyrolysis temperature were similar to those in Examples 1 to 4. The second resin used in Comparative Example 1 to Comparative Example 4 does not contain a heteroelement (that is, the mass ratios of the first resin polyphenylene ether to the second resin polyetheretherketone were 0.85:0.15, 0.85:0.15, 0.85:0.15, 0.75:0.15, and 0.70:0.30 respectively), the melting temperature was similar to that in Examples 1 to 4, and the pyrolysis temperature is shown in Table 4. In Comparative Example 5, a hard carbon active material, obtained through pyrolysis of the first resin polyphenylene ether at 910°C, was used and no pore structure or heteroelement was contained therein. In Comparative Example 6, an artificial graphite material was used.

The following describes methods for testing various parameters in this application.

1. SEM Test:

Scanning electron microscopy (SEM) is used to obtain the morphological structure of a sample through interaction between an electron beam and the sample, as well as secondary electronic signal imaging. In this application, the JSM-6360LV scanning electron microscope of JEOL and a matching X-ray energy spectrometer (scanning electron microscope-energy spectrometer) were used to analyze the morphological structure and element distribution of the sample.

2. Particle size test of negative electrode active material particles:

Refer to GB/T 19077-2016 for a method for measuring the particle size. The specific procedure was as follows. 1 g of sample, 20 mL of deionized water, and a small amount of dispersant were mixed evenly and placed in ultrasonic device for five minutes of ultrasonic processing, and then the solution was poured into the feeding system Hydro 2000SM for testing. The test device used was Mastersizer 3000 of Malvern. During the test, when a laser beam passes through the dispersed particle samples, the particle size was measured by measuring the intensity of the scattered light. The data was then used for analyzing and calculating the particle size distribution that forms the spectrogram of the scattered light. The refractive index of the particles under test was 1.8. One sample was tested for three times, and average values of the three tests were used as particle sizes $D_v10$, $D_v50$ and $D_v90$.

3. $I_D/I_G$ test:

A surface defect degree of the sample was tested using a laser microscope confocal Raman spectrometer, and a ratio $I_D/I_G$ of a peak intensity $I_D$ at 1350cm$^{-1}$ to a peak intensity $I_G$ at 1580cm$^{-1}$ of the sample was used to represent the surface defect degree of the sample. Each sample was tested at multiple potentials, and a standard deviation of the potentials was used to characterize uniformity of surface defect degrees in different regions. The average value and standard deviation of $I_D/I_G$ of the negative electrode active material was obtained by using the following method: An unsieved negative electrode active material was taken, 100 points were tested to obtain $I_D/I_G$ values, and the average value and standard deviation of these 100 values were calculated.

4. Specific surface area test of negative electrode active material particles:

A specific surface area of the negative electrode active material was measured using a specific surface area analyzer (Tristar II 3020M) by means of nitrogen adsorption/desorption. A sample of the negative electrode active material was dried in vacuum drying oven and then loaded into a sample tube for measurement in the analyzer.

5. Test of adhesion force between negative electrode active material layer and negative electrode current collector:

The adhesion force between the negative electrode active material layer and the negative electrode current collector was tested by using Instron 33652. Use double-sided adhesive paper (model: 3M9448A, 20 mm wide and 90 mm to 150 mm long) to fix the negative electrode (30 mm wide and 100 mm to 160 mm long) on a steel plate, fasten a paper tape as wide as the negative electrode and one side of the negative electrode by using adhesive paper, adjust the limiting block of a tensile tester to a proper position, fold the paper tape upward and slide it for 40 mm at a speed of 50 mm/min, and measure the adhesion force between the negative electrode active material layer and the negative electrode current collector under 180° pulling (namely, pulling in an opposite direction).

6. Test on compacted density of negative electrode active material layer:

A negative electrode was taken from a fully discharged lithium-ion battery, cleaned, and dried. An electronic balance was used to weigh a specific area S of the negative electrode (the negative electrode active material layer is applied on both sides of the negative electrode current collector). The weight was recorded as W1, and a thickness T1 of the negative electrode was measured using a micrometer. A solvent was used to wash off the negative electrode active material layer, and the negative electrode current collector was dried and weighed. The weight was recorded as W2, and a thickness T2 of the negative electrode current collector was measured using a micrometer. The weight WO and thickness T0 of the negative electrode active material layer provided on the negative electrode current collector side, as well as the compacted density of the negative electrode active material layer were calculated using the following formulas:

$$W0 = (W1-W2)/2$$

$$T0 = (T1-T2)/2$$

Compacted density of the negative electrode active material layer = WO/(T0×S).

7. Test on porosity of negative electrode:

Samples of the negative electrode active material layer were prepared into complete disks. 30 samples were tested in each example or comparative example, and the volume of each sample was approximately 0.35 cm$^3$. The porosity of the negative electrode was tested in accordance with GB/T24586-2009 Measurement of Apparent Density, True Density and Porosity of Iron Ore.

8. Test on gram capacity of negative electrode active material:

The negative electrode active material was made into a negative electrode after mixing, coating, and drying, a lithium sheet was used as a positive electrode, and they were assembled into a button battery for testing. The button battery was discharged to 5.0 mV at 0.05C, to 5.0 mV at 50 $\mu$A, and to 5.0 mV at 10 $\mu$A, and then charged to 2.0 V at 0.1C. The capacity of the button battery at that time was recorded as the gram capacity. 0.05C refers to a current for 0.05 times the designed gram capacity, and 0.1C refers to a current for 0.1 times the designed gram capacity.

9. Test on first-cycle charge/discharge efficiency of lithium-ion battery:

The lithium-ion battery was charged to 4.48 V at 0.5C, and the first-cycle charge capacity was recorded. Then, the lithium-ion battery was discharged to 3.0 V at 0.5C, and the first-cycle discharge capacity was recorded. The first-cycle efficiency of the lithium-ion battery was calculated using the following formula: CE = first-cycle discharge capacity/first-cycle charge capacity × 100%.

10. Energy density test:

Five lithium-ion batteries were taken from each group of examples and comparative examples, and an average value was calculated. First-cycle charging and discharging was performed in a 25°C environment, and constant-current and constant-voltage charging were performed at a charging current of 0.5C till an upper-limit voltage of 4.48 V. Then, constant-current discharging was performed at a discharge current of 0.2C till a discharge cut-off voltage of 3 V. An increase, relative to Comparative Example 6, in the energy density measured in each example and comparative example was calculated as a percentage indicating the percentage of the energy density in these examples to that measured in Comparative Example 6.

11. Cycling performance test of lithium-ion battery:

Five lithium-ion batteries were taken from each group of examples and comparative examples, and an average value was calculated. The lithium-ion batteries were repeatedly charged and discharged by performing the following steps, and the discharge capacity retention and thickness swelling of the lithium-ion batteries were calculated.

First-cycle charging and discharging was performed in a 25°C environment, constant-current charging was performed at a charge current of 0.7C till an upper-limit voltage of 4.48 V, and constant-voltage charging was performed. Then, constant-current discharging was performed at a discharge current of 1.0C till a cut-off voltage of 3 V. The first-cycle discharge capacity and the thickness of a fully charged lithium-ion battery were recorded. 400 cycles of charging and discharging were performed, and the discharge capacity of the 400th cycle was recorded.

Cycling capacity retention rate = (discharge capacity in the 400th cycle/discharge capacity in the first cycle) × 100%; and

cycling thickness swelling = (thickness of the fully charged lithium-ion battery in the 400th cycle/thickness of fully charged lithium-ion battery in the first cycle) × 100%.

12. Lithium precipitation test

The lithium-ion battery under test was left standing for five minutes at a 25°C temperature, charged to 4.48 V at a constant current of 3C, charged to 0.05C at a constant voltage of 4.48 V, left standing for five minutes, discharged to 2.0 V at a constant current of 0.5C, and then left standing for five minutes. The foregoing charging and discharging process was repeated for 10 times. The lithium-ion battery was fully charged and then disassembled in a drying room, and photos were taken to record the states of the negative electrode and the separator in contact with the negative electrode.

The degree of lithium precipitation was determined based on a contamination state of the separator in contact with the negative electrode removed from the fully-charged battery. If the separator in contact with the negative electrode was in white and an area in gray was <2%, it was determined that no lithium precipitation occurred. If a large portion of the separator in contact with the negative electrode was in white but some positions could be observed in gray and the area in gray was 2% to 20%, it was determined that lithium precipitation was slight. If part of the separator in contact with the negative electrode was in white but some positions were still observed in gray and the area in gray was 20% to 60%, it was determined that lithium precipitation occurred. If a large portion of the separator in contact with the negative electrode was in gray and the area in gray was >60%, it was determined that lithium precipitation was serious.

Table 1 to Table 4 show various parameters and evaluation results in Examples 1 to 28 and Comparative Examples 1 to 6. Elements boron, nitrogen, fluorine, phosphorus, and sulfur are collectively referred to as the heteroatom.

**Table 1**

| Example | Heteroatom type | Pyrolysis temperature (°C) | Area ratio of porous portion to nonporous portion | Atomic percentage of the heteroatom on interface (%) | $I_D/I_G$ | Gram capacity of negative electrode active material (mAh/g) |
|---|---|---|---|---|---|---|
| Example 1 | Boron | 710 | 0.14 | 3.8 | 1.19 | 552 |
| Example 2 | Boron | 910 | 0.12 | 3.3 | 1.07 | 509 |
| Example 3 | Boron | 1110 | 0.12 | 1.7 | 1.03 | 446 |
| Example 4 | Boron | 910 | 0.23 | 5.7 | 1.11 | 511 |
| Example 5 | Nitrogen | 710 | 0.13 | 4.0 | 1.24 | 693 |
| Example 9 | Fluorine | 710 | 0.13 | 3.6 | 1.20 | 516 |
| Example 13 | Phosphorus | 710 | 0.14 | 3.8 | 1.20 | 667 |
| Example 17 | Sulfur | 710 | 0.12 | 3.6 | 1.18 | 620 |

(continued)

| Example | Heteroatom type | Pyrolysis temperature (°C) | Area ratio of porous portion to nonporous portion | Atomic percentage of the heteroatom on interface (%) | $I_D/I_G$ | Gram capacity of negative electrode active material (mAh/g) |
|---|---|---|---|---|---|---|
| Example 21 | Boron Nitrogen | 710 | 0.13 | 3.5 | 1.19 | 672 |
| Example 25 | Nitrogen phosphorus | 710 | 0.12 | 3.8 | 1.19 | 627 |
| Comparative Example 1 | / | 710 | 0.13 | / | 1.15 | 452 |
| Comparative Example 2 | / | 910 | 0.14 | / | 1.04 | 430 |
| Comparative Example 3 | / | 1110 | 0.12 | / | 1.00 | 321 |
| Comparative Example 4 | / | 910 | 0.22 | / | 1.11 | 405 |
| Comparative Example 5 | / | 910 | / | / | 1.03 | 312 |
| Comparative Example 6 | / | / | / | / | 0.13 | 352 |
| Note: "/" means no addition. | | | | | | |

It can be known through comparison among Example 1, Example 5, Example 9, Example 13, Example 17, Example 21, Example 25, and comparative examples that hard carbon active materials doped with different heteroelements can be obtained by selecting second resins with different heteroelements. Through comparison among Example 1 to Example 3, in which the percentage of heteroelemental atoms is the same, the percentage of the heteroatom dramatically decreases as the pyrolysis temperature rises from 710°C to 1110°C. In Comparative Example 2 and Example 4, the second resins with the same heteroelement and the heat treatment process are selected, and hard carbon active materials with different total percentages of the heteroatom can be easily obtained by changing the amount of the second resin added. $I_D/I_G$ of the hard carbon active materials doped with different heteroelements is higher than that of the hard carbon active materials not doped with heteroelements in the comparative examples and much higher than that of the graphite active material in Comparative Example 6. The gram capacity of the hard carbon active materials doped with different heteroelements is higher than that of the hard carbon active materials not doped with heteroelements in the comparative examples and that of the graphite active materials. In Example 5, the nitrogen-doped hard carbon negative electrode active material, which is heat-treated at 710°C, has the largest gram capacity.

**Table 2**

| Example | Pyrolysis temperature (°C) | Area ratio of porous portion to nonporous portion | 002 interplanar spacing (nm) | Specific surface area of negative electrode active material particles (cm$^{-2}$/g) | Porosity of negative electrode (%) | Status of lithium precipitation | First-cycle charge/ discharge efficiency of lithium-ion battery (%) |
|---|---|---|---|---|---|---|---|
| Example 5 | 710 | 0.13 | 0.385 | 4.1 | 19.3 | No lithium precipitation | 73.0 |
| Example 6 | 910 | 0.14 | 0.371 | 4.4 | 18.4 | No lithium precipitation | 71.9 |

(continued)

| Example | Pyrolysis temperature (°C) | Area ratio of porous portion to nonporous portion | 002 interplanar spacing (nm) | Specific surface area of negative electrode active material particles (cm$^{-2}$/g) | Porosity of negative electrode (%) | Status of lithium precipitation | First-cycle charge/discharge efficiency of lithium-ion battery (%) |
|---|---|---|---|---|---|---|---|
| Example 7 | 1110 | 0.10 | 0.358 | 3.5 | 17.9 | No lithium precipitation | 74.2 |
| Example 8 | 910 | 0.25 | 0.378 | 6.8 | 25.5 | No lithium precipitation | 69.9 |
| Example 9 | 710 | 0.13 | 0.389 | 4.1 | 22.2 | No lithium precipitation | 73.1 |
| Example 10 | 910 | 0.12 | 0.37 | 4.0 | 20.4 | No lithium precipitation | 75.1 |
| Example 11 | 1110 | 0.13 | 0.355 | 4.1 | 21.7 | No lithium precipitation | 76.7 |
| Comparative Example 1 | 710 | 0.13 | 0.389 | 4.1 | 19.4 | No lithium precipitation | 65.5 |
| Comparative Example 2 | 910 | 0.14 | 0.378 | 4.2 | 19.4 | No lithium precipitation | 67.2 |
| Comparative Example 3 | 1110 | 0.12 | 0.358 | 3.9 | 19.9 | Slight lithium precipitation | 67.5 |
| Comparative Example 4 | 910 | 0.22 | 0.371 | 6.1 | 26.2 | No lithium precipitation | 64.9 |
| Comparative Example 6 | / | 0 | 0.335 | 4.0 | 15.7 | Lithium precipitation | 91.5 |

Through comparison among Example 5, Example 6, and Example 7 doped with nitrogen, the 002 interplanar spacing of the negative electrode active material decreases as the heat treatment temperature rises. The hard carbon active materials have similar specific surface areas, and the negative electrodes have similar porosities. In addition, similar rules hold for Example 9, Example 10, and Example 11 doped with fluorine, and for Comparative Example 1, Comparative Example 2, and Comparative Example 3 doped with no element. Through comparison between Example 6 and Example 8 and between Comparative Example 2 and Comparative Example 4, it can be known that the area ratio of the porous portion to the nonporous portion also rises for the hard carbon active materials obtained by changing the amount of the second resin added.

With abundant pore structures, the hard carbon negative electrode active materials have a negative electrode active material layer with a high porosity. The hard carbon negative electrode active materials have excellent fast charging performance due to a high porosity and a d002 interplanar spacing much larger than that of the graphite negative electrode active material. Under the same charging/discharging conditions, the negative electrode active materials in all examples are superior to the graphite negative electrode active material in Comparative Example 6 in terms of lithium precipitation. The pore structures help increase contact between the active material particles and the electrolyte and accelerate deintercalation of lithium ions. However, a large specific surface area and a high porosity will lead to more SEI films during first-cycle charging, causing an irreversible capacity loss. Through comparison in first-cycle charge/discharge efficiency of the lithium-ion battery between Example 6 and Comparative Example 2 and between Example 8 and Comparative Example 4, it can be known that more pores cause the lithium-ion batteries in Example 8 and Comparative Example 4 to have lower first-cycle charge/discharge efficiency.

**Table 3**

| Example | $D_v10$ (μm) | $D_v50$ (μm) | $D_v90$ (μm) | Adhesion force between negative electrode active material layer and current collector (N/m) | Compacted density of negative electrode active material layer (g/cm$^2$) | Percentage of energy density to that in Comparative Example 6 (%) |
|---|---|---|---|---|---|---|
| Example 14 | 3.4 | 13.5 | 26.8 | 14.7 | 1.07 | 100.1 |
| Example 16 | 2.6 | 13.9 | 26.8 | 15.7 | 0.99 | 97.5 |
| Comparative Example 2 | 2.8 | 13.8 | 25.9 | 14.8 | 1.02 | 80.3 |
| Comparative Example 4 | 3.1 | 14.3 | 26.0 | 14.4 | 0.93 | 73.0 |

Through comparison between Example 14 and Example 16 doped with phosphorus and between Comparative Example 2 and Comparative Example 4 doped with no element, it can be known that if the negative electrode active material particles have similar particle sizes, the adhesion forces between the corresponding negative electrode active material layers and the current collectors are close. It can be known through comparison in the compacted density of the negative electrode active material layer that the negative electrode active material layers in Example 16 and Comparative Example 4 have a lower compacted density. This is because a percentage of the second resin added to the matrix resin becomes higher, and more porous portions are generated in the hard carbon negative electrode active materials after pyrolysis, causing a lower compacted density of the negative electrode active material layer. Comparison between Example 14 and Example 16 shows that a higher compacted density can contribute to a higher energy density.

**Table 4**

| Example | Element type of the heteroatom | First-cycle charge/ discharge efficiency of lithium-ion battery (%) | Percentage of energy density to that in Comparative Example 6 (%) | Cycling thickness swelling (%) | Cycling capacity retention rate (%) |
|---|---|---|---|---|---|
| Example 1 | Boron | 71.2 | 106.0 | 2.7 | 89.4 |
| Example 2 | Boron | 70.6 | 100.4 | 2.6 | 89.4 |
| Example 3 | Boron | 73.5 | 98.0 | 2.6 | 89.4 |
| Example 4 | Boron | 68.5 | 98.1 | 2.7 | 89.5 |
| Example 5 | Nitrogen | 73.0 | 108.8 | 2.7 | 89.4 |
| Example 6 | Nitrogen | 71.9 | 103.0 | 2.7 | 89.5 |
| Example 7 | Nitrogen | 74.2 | 100.5 | 2.8 | 89.5 |
| Example 8 | Nitrogen | 69.9 | 99.0 | 2.7 | 89.4 |
| Example 9 | Fluorine | 73.1 | 98.5 | 2.7 | 89.5 |
| Example 10 | Fluorine | 75.1 | 94.9 | 2.3 | 90.4 |
| Example 11 | Fluorine | 76.7 | 90.3 | 2.2 | 90.4 |
| Example 12 | Fluorine | 69.6 | 87.8 | 2.1 | 90.5 |
| Example 13 | Phosphorus | 73.4 | 104.0 | 2.5 | 90.5 |
| Example 14 | Phosphorus | 70.3 | 100.1 | 2.3 | 90.4 |
| Example 15 | Phosphorus | 72.3 | 97.7 | 2.2 | 90.5 |
| Example 16 | Phosphorus | 67.8 | 97.5 | 2.5 | 90.5 |
| Example 17 | Sulfur | 72.2 | 102.0 | 2.4 | 90.5 |
| Example 18 | Sulfur | 71.5 | 101.1 | 2.3 | 90.4 |
| Example 19 | Sulfur | 70.6 | 97.8 | 2.0 | 91.4 |

(continued)

| Example | Element type of the heteroatom | First-cycle charge/ discharge efficiency of lithium-ion battery (%) | Percentage of energy density to that in Comparative Example 6 (%) | Cycling thickness swelling (%) | Cycling capacity retention rate (%) |
|---|---|---|---|---|---|
| Example 20 | Sulfur | 69.4 | 96.6 | 1.8 | 91.3 |
| Example 21 | Boron Nitrogen | 73.3 | 106.4 | 1.7 | 91.4 |
| Example 22 | Boron Nitrogen | 74.0 | 101.6 | 2.2 | 90.5 |
| Example 23 | Boron Nitrogen | 72.3 | 97.9 | 2.0 | 91.4 |
| Example 24 | Boron Nitrogen | 68.8 | 97.5 | 1.8 | 91.3 |
| Example 25 | Nitrogen phosphorus | 70.4 | 105.9 | 2.3 | 90.5 |
| Example 26 | Nitrogen phosphorus | 72.5 | 101.7 | 2.0 | 90.5 |
| Example 27 | Nitrogen phosphorus | 72.6 | 97.5 | 1.9 | 91.4 |
| Example 28 | Nitrogen phosphorus | 68.6 | 98.1 | 1.7 | 90.5 |
| Comparative Example 1 | / | 65.5 | 83.5 | 2.9 | 86.5 |
| Comparative Example 2 | / | 67.2 | 80.3 | 2.8 | 86.4 |
| Comparative Example 3 | / | 67.5 | 82.1 | 2.9 | 87.2 |
| Comparative Example 4 | / | 64.9 | 73.0 | 2.8 | 87.9 |
| Comparative Example 5 | / | 62.5 | 70.7 | 3.0 | 87.4 |
| Comparative Example 6 | / | 91.5 | 100 | 10.3 | 90.1 |

Hard carbon negative electrode active materials have many defects. The defects can provide more lithium storage sites for the active material and accelerate deintercalation of lithium ions, but cause a great irreversible capacity loss of the hard carbon active materials. It can be known through comparison between examples and comparative examples, the lithium-ion batteries using hard carbon negative electrode active materials in all the examples have lower first-cycle charge/discharge efficiency than that using a graphite negative electrode active material in Comparative Example 6. In Example 11, the first-cycle charge/discharge efficiency of the lithium-ion battery using a fluorine-doped hard carbon negative electrode active material is as high as 76.7%. Compared with the first charge/discharge efficiency tested in Comparative Examples 1 to 5, the first-cycle charge/discharge efficiency in the examples doped with a heteroelement is relatively high because a heteroelement-doped active material has more lithium storage sites.

A large lithium storage capacity can be obtained by doping heteroelements, and therefore a lithium-ion battery using a hard carbon negative electrode active material can have a high energy density. Through comparison between Examples 1 to 28 and Comparative Examples 1 to 5, the energy density in heteroelement-doped examples is higher than that in the comparative examples, where the energy density is increased to the maximum in nitrogen-doped Example 5. In addition, the cycling performance and swelling performance in the examples are also improved to a greater extent compared with those in the comparative examples doped with no impurity elements, and the overall electrochemical performance is better in the examples.

Furthermore, the hard carbon negative electrode active material features small swelling during charging and discharging. Therefore, a variance in the thickness of the lithium-ion battery assembled using the hard carbon negative electrode active material is maintained approximately below 3% after 400 cycles, which is much lower than that in Comparative Example 6 using the graphite negative electrode active material. After 400 cycles, the capacity retention rates of the lithium-ion batteries assembled in all the examples are close to that in Comparative Example 6 where a graphite negative electrode active material is used.

**Table 5**

| | Electrolyte | | | Test | |
|---|---|---|---|---|---|
| | LiFSI (mol/L) | LiPF$_6$ (mol/L) | Mass ratio | Cycling thickness swelling (%) | Cycling capacity retention rate (%) |
| Example 12 | 0 | 1 | 0 | 2.1 | 90.5 |
| Example 26 | 0.05 | 1 | 0.062 | 1.9 | 91.9% |
| Example 27 | 1 | 1 | 1.231 | 1.5 | 93.5% |
| Example 28 | 1 | 0.3 | 4.1 | 1.7 | 92.3% |
| Note: The molar mass of LiFSI is 187.07 g/mol, and the molar mass of LiPF$_6$ is 151.91 g/mol. | | | | | |

In Table 5, Examples 26 to 28 are similar to Example 12 except that the cycling performance and swelling performance are improved by adding the lithium salt lithium bis(fluorosulfonyl)imide (LiFSI) and adjusting a mass ratio of LiFSI to LiPF$_6$. This is mainly because the negative electrode active material doped with the heteroatom can interact with the lithium salt in the electrolyte to improve the interface between the negative electrode and the electrolyte.

The foregoing descriptions are only preferred embodiments of this application and explanations of the applied technical principles. Persons skilled in the art should understand that the scope of disclosure involved in this application is not limited to the technical solutions formed by the specific combination of the foregoing technical features, and should also cover other technical solutions formed by any combination of the foregoing technical features or their equivalent features, for example, the technical solution formed by replacement between the foregoing features and technical features having similar functions disclosed in this application.

**Claims**

1. A negative electrode, comprising a negative electrode active material layer, wherein the negative electrode active material layer comprises negative electrode active material particles, the negative electrode active material particles comprise a porous portion and a nonporous portion, the nonporous portion comprises a heteroatom, and the heteroatom comprises at least one of element boron, nitrogen, fluorine, phosphorus, or sulfur.

2. The negative electrode according to claim 1, wherein the nonporous portion has an interface, and the interface is a region formed from a bordering position between the nonporous portion and the porous portion to 0.5 $\mu$m from the bordering position, wherein through analysis using a scanning electron microscope-energy spectrometer, at least one of the following conditions (a) to (c) is satisfied:

    (a) within a test area of 0.2 $\mu$m $\times$ 0.2 $\mu$m in the interface, based on a total elemental atomic percentage of the heteroatom, C, and O, an atomic percentage of the heteroatom is a%, wherein $1 \le a \le 6$;
    (b) within a test area of 0.2 $\mu$m $\times$ 0.2 $\mu$m in the nonporous portion with a boundary between 2.8 $\mu$m to 3.2 $\mu$m from the bordering position, based on a total elemental atomic percentage of the heteroatom, C, and O, an atomic percentage of the heteroatom is b%, wherein $b \le 0.1$; or
    (c) within a test area of 50 $\mu$m $\times$ 50 $\mu$m, an area ratio of the porous portion to the nonporous portion is 0.05 to 0.30.

3. The negative electrode according to claim 1, wherein the porous portion has a pore diameter with a value ranging from 0.1 $\mu$m to 3 $\mu$m.

4. The negative electrode according to claim 1, wherein the negative electrode active material particles have a specific surface area of 1 m$^2$/g to 10 m$^2$/g.

**5.** The negative electrode according to claim 1, wherein the negative electrode has a porosity of 15% to 40%.

**6.** The negative electrode according to claim 1, wherein a ratio $I_D/I_G$ of the negative electrode active material particles ranges from 0.8 to 1.4 under a Raman spectroscopy test, wherein $I_D$ denotes a peak intensity at 1350 $cm^{-1}$ in the Raman spectrum and $I_G$ denotes a peak intensity at 1580 $cm^{-1}$ in the Raman spectrum.

**7.** The negative electrode according to claim 1, wherein at least one of the following conditions (d) to (g) is satisfied:

(d) the negative electrode active material particles have $D_v10 < 6$ μm and $D_v50 < 15$ μm;
(e) the negative electrode active material particles have $D_v90 < 30$ μm;
(f) the negative electrode active material particles comprise hard carbon; or
(g) the negative electrode active material layer has a compacted density of 0.95 $g/cm^3$ to 1.40 $g/cm^3$.

**8.** An electrochemical apparatus, comprising the negative electrode according to any one of claims 1 to 7 and an electrolyte, wherein the electrolyte comprises at least one of fluoroether, fluoroethylene, or ether nitrile.

**9.** The electrochemical apparatus according to claim 8, wherein at least one of the following conditions (h) and (i) is satisfied:

(h) the negative electrode further comprises a negative electrode current collector, and an adhesion force between the negative electrode current collector and the negative electrode active material layer is 3 N/m to 50 N/m; or
(i) the electrolyte further comprises a lithium salt, wherein the lithium salt comprises lithium bis(fluorosulfonyl)imide and lithium hexafluorophosphate, a concentration of the lithium salt is 1 mol/L to 2 mol/L, and a mass ratio of lithium bis(fluorosulfonyl)imide to lithium hexafluorophosphate is 0.06 to 5.

**10.** An electronic apparatus, comprising the electrochemical apparatus according to claim 8 or 9.

101
102
100

FIG. 1

## INTERNATIONAL SEARCH REPORT

| International application No. |
|---|
| **PCT/CN2021/101234** |

**A. CLASSIFICATION OF SUBJECT MATTER**

H01M 4/583(2010.01)i; H01M 4/36(2006.01)i

According to International Patent Classification (IPC) or to both national classification and IPC

**B. FIELDS SEARCHED**

Minimum documentation searched (classification system followed by classification symbols)

H01M

Documentation searched other than minimum documentation to the extent that such documents are included in the fields searched

Electronic data base consulted during the international search (name of data base and, where practicable, search terms used)

CNABS; CNTXT; VEN; USTXT; EPTXT; WOTXT; ISI; CNKI: 宁德新能源, 硬碳, 硬炭, 热解碳, 热解炭, 掺杂, 杂原子, 氮, 氟, 硼, 磷, 硫, 树脂, 熔融, 共熔, 熔化, 残碳率, 残炭率, 孔, hard carbon, heteroatom, nitrogen, boron, sulfur, phosphorus, fluorine, "N", "F", "B", "S", "P", porous, hole, resin, pyrolytic carbon

**C. DOCUMENTS CONSIDERED TO BE RELEVANT**

| Category* | Citation of document, with indication, where appropriate, of the relevant passages | Relevant to claim No. |
|---|---|---|
| X | CN 101887966 A (SHENZHEN BTR NEW ENERGY MATERIALS CO., LTD.) 17 November 2010 (2010-11-17) <br> description, paragraphs [0002]-[0053] | 1, 3-10 |
| X | CN 111969201 A (TIANJIN UNIVERSITY et al.) 20 November 2020 (2020-11-20) <br> description, paragraphs [0005]-[0012] | 1, 3-10 |
| X | CN 103814465 A (SUMITOMO BAKELITE CO.) 21 May 2014 (2014-05-21) <br> description, paragraphs [0039]-[0080] and [0166]-[0203] | 1, 3-10 |
| X | KR 20200059135 A (INDUSTRY FOUNDATION OF CHONNAM NATIONAL UNIVERSITY) 28 May 2020 (2020-05-28) <br> description, paragraphs [0009]-[0016] and [100]-[0124] | 1, 3-10 |
| A | JP 2006083012 A (NEC CORP. et al.) 30 March 2006 (2006-03-30) <br> entire document | 1-10 |

☐ Further documents are listed in the continuation of Box C.  ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **17 January 2022** | **28 January 2022** |

| Name and mailing address of the ISA/CN | Authorized officer |
|---|---|
| **China National Intellectual Property Administration (ISA/CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

INTERNATIONAL SEARCH REPORT
Information on patent family members

International application No.

**PCT/CN2021/101234**

| Patent document cited in search report | | | Publication date (day/month/year) | Patent family member(s) | | | Publication date (day/month/year) |
|---|---|---|---|---|---|---|---|
| CN | 101887966 | A | 17 November 2010 | CN | 101887966 | B | 05 December 2012 |
| | | | | WO | 2011157013 | A1 | 22 December 2011 |
| | | | | KR | 20130030769 | A | 27 March 2013 |
| | | | | JP | 2013534024 | A | 29 August 2013 |
| | | | | JP | 5680191 | B2 | 04 March 2015 |
| CN | 111969201 | A | 20 November 2020 | None | | | |
| CN | 103814465 | A | 21 May 2014 | TW | 201330366 | A | 16 July 2013 |
| | | | | TW | I557972 | B | 11 November 2016 |
| | | | | US | 2014227522 | A1 | 14 August 2014 |
| | | | | WO | 2013035859 | A1 | 14 March 2013 |
| | | | | KR | 20140062125 | A | 22 May 2014 |
| | | | | CN | 103814465 | B | 06 April 2016 |
| | | | | EP | 2755262 | A1 | 16 July 2014 |
| | | | | EP | 2755262 | A4 | 22 April 2015 |
| | | | | JP | 2013058449 | A | 28 March 2013 |
| | | | | JP | 2013069556 | A | 18 April 2013 |
| | | | | JP | 2013077530 | A | 25 April 2013 |
| | | | | JP | 5831110 | B2 | 09 December 2015 |
| | | | | JP | 5838673 | B2 | 06 January 2016 |
| | | | | JP | 5961956 | B2 | 03 August 2016 |
| KR | 20200059135 | A | 28 May 2020 | None | | | |
| JP | 2006083012 | A | 30 March 2006 | JP | 4660146 | B2 | 30 March 2011 |

Form PCT/ISA/210 (patent family annex) (January 2015)

**EP 4 358 188 A1**

## REFERENCES CITED IN THE DESCRIPTION

**Patent documents cited in the description**

- GB 190772016 T
- GB 245862009 T